Europäisches Patentamt

European Patent Office

Office européen des brevets

(11) Publication number: **0 051 772**
**B1**

# EUROPEAN PATENT SPECIFICATION

(45) Date of publication of patent specification: **23.07.86**

(51) Int. Cl.⁴: **G 05 G 5/00**

(21) Application number: **81108758.4**

(22) Date of filing: **22.10.81**

(54) **Operating lever with safety device for control valves of manually-operated sliding-spool type used in hydraulically-operated lifting gears and conveying plants.**

(30) Priority: **12.11.80 IT 2 2905080 U**

(43) Date of publication of application:
**19.05.82 Bulletin 82/20**

(45) Publication of the grant of the patent:
**23.07.86 Bulletin 86/30**

(84) Designated Contracting States:
**DE FR GB**

(56) References cited:
**DE-A-2 611 628**
**GB-A- 949 250**
**US-A-2 512 312**
**US-A-4 229 993**

(73) Proprietor: **SALAMI S.p.A.**
**1006, Via Emilia Ovest**
**I-41100 Modena (IT)**

(72) Inventor: **Salami, Giuseppe**
**44, Via Argiolas**
**I-41100 Modena (IT)**

(74) Representative: **Gardi, Giuliano**
**Gardipatent Palazzo Prora 605, Via Giardini**
**I-41100 Modena (IT)**

Courier Press, Leamington Spa, England.

## Description

The invention relates to an operating lever, incorporating a safety device, for control valves of manually-operated sliding-spool type used in hydraulically-operated lifting gears and conveyor systems i.e.: a stick on which to lay hold and by means of which manipulate the control valve which operates machinery, or parts thereof, employed in the lifting of loads or the moving about of materials by internal industrial conveyor plants: the inclusion of the safety device in the lever assembly being intended more especially to prevent against untimely function of machinery arising from unwarranted operations by unskilled personnel.

Current technology makes no provision for such a safety device incorporated into the operating lever mechanism. Only a shield for protection of the lever itself against damage by accidental impact is known.

The aforesaid technology, such as it is, is susceptible to further improvement with regard to the fact that a simple shield affords insufficient protection in itself against the possibility of the lever's being manipulated by a child, or other inexpert individual, occasioning unwanted operation of machinery or parts thereof and consequent risk of serious danger to persons and property.

From DE—A—2 611 628 (in particular from page 6, line 7 to page 7, line 6) it is known an operating arrangement for control valves of a manually-operated sliding spool type used in hydraulically operated lifting-gears comprising a lever 24 for driving a control piston 19 and a safety locking device for retaining said lever on a safety locked position. Said safety locking device requests, for unlocking said lever 24, that this latter performs a first movement in its axial direction against the force exerted by a compression spring 28 and a second movement whereby said lever 24 rotates around its own axis. Said operating arrangement further shows that said lever 24 is axially movable inside a body 15, pivotably mounted on an axis 14 which is supported by the body 12 of the controlling valve. Said operating lever 24 is further pulled into said locked safety position by said compression spring 28 which is resting upon said pivotably mounted body 15. Said lever 24 is further solidarly jointed with a locking rod 26 which, in the locked situation, penetrates and engages a locking aperture 23. Said lever 24 is further provided with a locking pin which, according to said first (axial) and second (rotational) movements of said lever 24, cooperates with a locking groove 32 and with an unlocking groove 33 respectively.

In order to replace said lever 24 on said safety locked position, said lever has to be moved first axially and manually, against the force exerted by said compression spring 28, towards said pivotably mounted body 15 until its locking rod 26 engages again said locking aperture 23 and then rotated in the direction opposite to that which has provoked the unlocking of said lever 24. (The reference numbers are that of said DE—A—2 611 628).

From US—A—4 229 993 it is known a manually controlled actuating device including a shaft adjustably mounted for movement from a predetermined rest-position whereby means comprising a compression spring surrounding a rod which shows a locking pin are provided to ensure the locking of said shaft at said rest-position and to ensure that said shaft comes in any case back to said rest-position when no more force is manually applied to a suitably conformed handle mounted on said shaft. From the above outline one may discern the necessity for a solution to the technical problem posed by a lever incapable of operation by a child or other inexpert individual i.e.: a lever corresponding to recently prescribed accident prevention standards.

The invention as described herein and as claimed resolves the said technical problem by adoption of an operating lever with safety device, for control valves of manually-operated sliding spool type used in hydraulically operated lifting-gears and conveying-plants, comprising a manually operated lever connected to a yoke, said yoke being arranged to rotate around a first transversally placed pivot supported by a bracket extending from a supporting plate attached to the control valve body wherein a piston is caused to stroke, the shank of said piston being furnished with a hole accommodating a second pivot having prismatic extremities which engage two slots provided in said yoke, characterised by the fact that said lever is fixedly connected to a third pivot, said third pivot being rotatably accommodated within a bush, said bush being in turn fixedly connected with said yoke; the extremity of said third pivot other than that lodged within said bush having fixed there to a radial arm furnished with a lateral tooth adopted for insertion into a slot located in a protruding portion of said bracket which forms an integral part of a fixture, thus establishing a locked safety position, said fixture consituting means by which said first transversal pivot is mounted onto said supporting plate and hence onto the body of the aforesaid control valve; and that a torsion spring surrounding said third pivot around which rotates said lever has its extremities anchored against said radial arm on the one hand, and against an appendage issued from said yoke on the other hand.

The advantage provided by the invention is that of having provided a simple and effective safety device which will prevent the lever from being moved in the traditional direction of operation, in the event of its being laid hold on by a child or other inexpert individual.

One embodiment of the invention will now be described, by way of example, with the aid of the three accompanying sheets of drawings, in which:

Fig. 1 is a side view of the device in its locked position, corresponding to the control valve piston in a non-working position;

Fig. 2 is a cross-section as viewed according to II—II in Fig. 1, showing the control valve piston's articulated control mechanism;

Fig. 3 is a cross-section as viewed according to III—III in Fig. 1, showing the device's articulated disengagement mechanism;

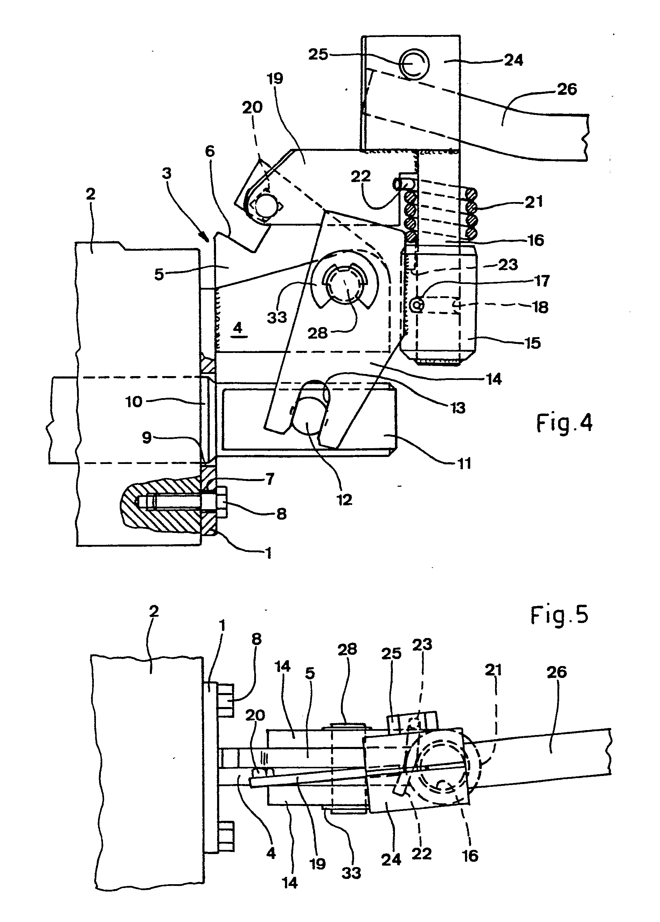

Fig. 4 is the same side view of the device as in Fig. 1, showing the control valve piston in a working position;

Fig. 5 shows a top view of Fig. 4, demonstrating the position of the locking mechanism with the piston in a working position.

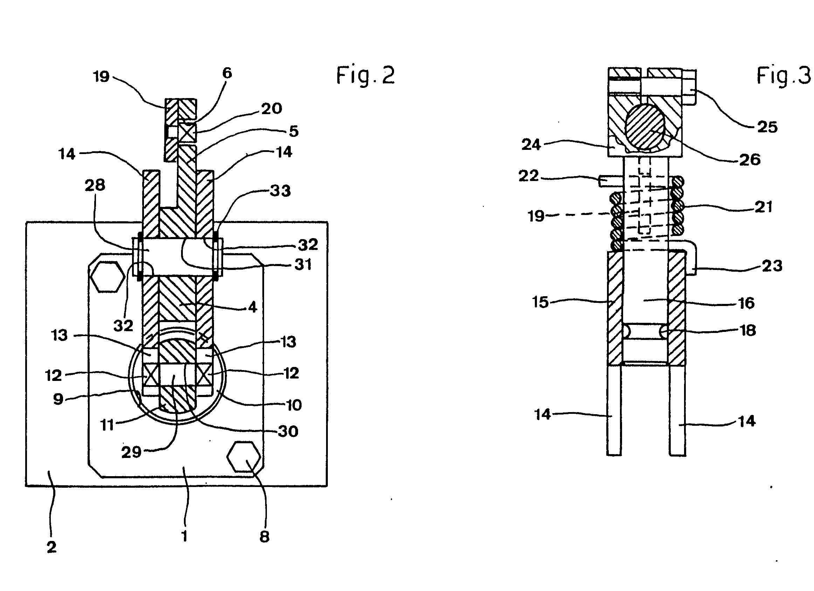

With reference to the drawings, 1 denotes a supporting plate connecting a fixture 3 to the valve body 2, fixture 3 is furnished with a bracket 4 which form integral part thereof and extends into a further protruding portion 5 provided with a slot denoted by 6; 7 denotes holes located in said supporting plate 1 for fixing said plate to valve body 2 by means of insertion of fastening screwed bolts 8; 9 denotes an aperture in supporting plate 1 through which the piston 10 of control valve 2 is destined to pass; 11 denotes the shank of piston 10, furnished with a through hole 30 (Fig. 2) to accommodate a pivot 29 (Fig. 2) provided with two prismatic extremities 12 forming a sliding fit with relative slots 13 located in a yoke 14 protruding forth from a bush 15, the latter accommodating a pivot 16 capable of rotating therewith and retained axially therein by means of a tangentially located pin 17 engaging an undercut 18 in said pivot 16; 19 denotes a radial arm extending forth from said pivot 16 and being fixedly connected to that extremity of said pivot 16 not lodged within said bush 15. At the extremity of said radial arm 19 a tooth 20 is affixed, this being disposed laterally thereon and designed to seek out and mate with slot 6 in bracket portion 5 thus establishing the locked, or safe position; 21 denotes a torsion spring surrounding said pivot 16, the extremities 22 & 23 of said spring 21 engage respectively with that face of radial arm 19 other than the face bearing said tooth 20, and with the rearward edge of yoke appendage 14; 24 denotes a cramp affixed to the uppermost extremity of pivot 16 furnished with a screwed clamping bolt 25 for holding fast the extremity of the operating lever 26, the latter being provided with an handgrip, or knob 27; 28 denotes a transversally placed pivot providing a rotational articulation between fixture 3 and bracket 4; (in Fig. 2) 29 denotes a further pivot accommodated within valve piston shank 11 by passing through hole 30, retained therein by dint of aforesaid prismatic extremities 12; 31 & 32 denote respective section of a hole passing through fixture 3 and yoke 14 for accommodation of pivot 28, the latter constituting the coupling necessary thereto, and retained thus by retaining rings, or circlips 33.

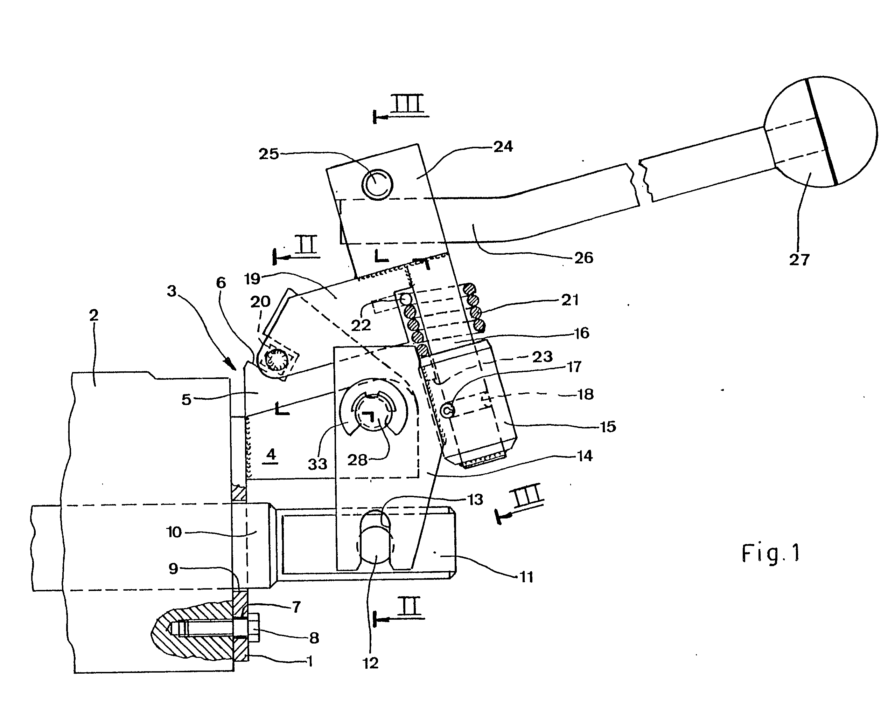

The invention functions in the following manner: from the locked position (Fig. 1) the operator causes the device to pass into one of the working positions (Fig. 2) by manipulating lever 26 so as to produce its rotation around pivot 16 against the force exerted by torsion spring 21, thus occasioning lateral disengagement of tooth 20 from slot 6 in bracket portion 5; this accomplished, the operator then acts on lever 26, causing its rotation around transversal pivot 28 in the normal fashion thus making piston 10 to stroke in one direction or the other in order to provoke the flow of hydraulic fluid through the body of chamber 2. Angular displacements of lever 26 in the traditional directions produce corresponding angular movements of radial arm 19 and yoke 14, which in turn cause related movements between shank 11, pivot extremities 12 and slots 13, and ultimately rotations of pivot 29.

When carrying out the invention, materials, as well as dimensions and design particulars — the shape of lever shaft 26 for instance, and the fact that this could be connected directly to pivot 16 thereby dispensing with cramp element 24 — may all differ from those specified in the disclosure above whilst maintaining an equivalent technical function and by no means straying from within the bounds of protection afforded to the basic concept as described above, and claimed below.

**Claim**

An operating lever with safety device, for control valves of manually-operated sliding spool type used in hydraulically operated lifting-gears and conveying-plants, comprising a manually operated lever (26) connected to a yoke (14), said yoke being arranged to rotate around a first transversally placed pivot (28) supported by a bracket (4) extending from a supporting plate (1) attached to the control valve body (2) wherein a piston (10) is caused to stroke, the shank (11) of said piston being furnished with a hole (30) accommodating a second pivot (29) having prismatic extremities (12) which engage two slots (13) provided in said yoke (14), characterised by the fact that said lever (26) is fixedly connected to a third pivot (16), said third pivot (16) being rotatably accommodated within a bush (15), said bush (15) being in turn fixedly connected with said yoke (14); the extremity of said third pivot (16) other than that lodged within said bush (15) having fixed thereto a radial arm (19) furnished with a lateral tooth (20) adapted for insertion into a slot (6) located in a protruding portion (5) of said bracket (4) which bracket forms an integral part of a fixture (3), thus establishing a locked safety position, said fixture (3) constituting means by which said first transversal pivot (28) is mounted onto said supporting plate (1) and hence onto the body (2) of the aforesaid control valve; and that a torsion spring (21) surrounding said third pivot (16) around which rotates said lever (26) has its extremities anchored against said radial arm (19) on the one hand, and against an appendage issued from said yoke (14) on the other hand.

## Revendication

Levier de commande à dispositif de sécurité, pour valve de contrôle à distributeur coulissant commandé manuellement, utilisé pour la commande hydraulique de transmissions de levage et d'installations de transport, comprenant un levier à commande manuelle (26) relié à un étrier (14), cet étrier étant conçu de manière à pivoter autour d'un premier pivot (28) placé en position transversale soutenu par une potence (4) s'étendant à partir d'un plateau de support (1) fixé au corps de la soupape de contrôle (2), dans lequel se déplace un piston (10), la tige (11) de ce piston étant munie d'une cavité (30) dans laquelle vient se loger un deuxième pivot (29) ayant des extrémités prismatiques (12) qui sont en prise avec deux fentes (13) ménagées dans l'étrier (14), caractérisé par le fait que le levier (26) est couplé de manière fixe avec un troisième pivot (16), ce troisième pivot (16) étant logé dans un manchon (15) dans lequel il peut pivoter, ce manchon (15) étant à son tour couplé de manière fixe avec l'étrier (14); l'extrémité de ce troisième pivot (16) opposée à celle qui est logée à l'intérieur du manchon (15) ayant un bras radial (19) qui y est fixé et qui est muni d'une dent latérale (20) qui vient se placer dans une fente (6) située sur une partie saillante (5) de la potence (4) et qui fait, avec la potence, partie intégrante d'un ancrage (3), créant ainsi une position de verrouillage de sécurité, cet ancrage (3) constituant un moyen par lequel le premier pivot transversal (28) est monté sur le plateau de support (1) et par conséquent sur le corps (2) de la valve de contrôle mentionnée ci-dessus; et par le fait qu'un ressort de torsion (21) qui entoure le troisième pivot (16) autour duquel pivot le levier (26) a ses extrémités ancrées contre le bras radial (19) d'une part, en contre un prolongement de l'étrier (14) d'autre part.

## Patentanspruch

Bedienungshebel mit Sicherheitseinrichtung für Steuerventile mit handbetätigtem gleitenden Verteiler, angewandt in hydraulisch betätigten Hebetriebwerken und Förderaggregaten, der einen handbetätigten mit einem Joch (14) verbundenen Hebel (26) aufweist, wobei das Joch zur Drehung um einen ersten querliegenden und durch eine Gabel (4) gestützten Stift (28) ausgebildet ist, die Gabel von einer am Steuerventilgehäuse (2) befestigten Halteplatte (1) vorsteht, worin eine Kolben (10) seinen Hub ausführt, der Kolbensshaft (11) mit einer Bohrung (30) zur Aufnahme eines zweiten Stiftes (29) mit prismenförmigen Enden versehen ist, die in die beiden Schlitze (13) genannten Jochs eingreifen, dadurch gekennzeichnet, dass der genannte Hebel (26) mit einem dritten Stift (16) fest verbunden ist, wobei dieser dritte Stift (16) drehend in einer Buchse (15) gelagert ist und die Buchse (15) fest mit genanntem Joch (14) verbunden ist; das Ende des dritten Stiftes (16), das nicht in genannter Buchse (15) gelagert ist, hat einen Radialarm (19) mit einem Seitenzahn (20) zum Eingreifen in den Schlitz (6) auf dem vorstehenden Abschnitt (5) genannter Gabel (4) daran befestigt, sodass die Gabel einen Bestandteil dieser Befestigung (3) bildet und somit eine geschlossene Sicherheitsposition darstellt; diese Befestigung (3) ist das Mittel, durch welches der genannte erste querliegende Stift (28) auf genannter Halteplatte (1) aufliegt und dadurch auch auf dem Gehäuse (2) des vorgenannten Steuerventils; eine Torsionsfeder (21) um genannten dritten Stift (16) gelagert, um welchen genannter Hebel (26) dreht, ist mit ihren Enden auf der einen Seite gegen den genannten Radialarm (19) verankert, aur der anderen Seite gegen einen Anhang von genanntem Joch (14) ausgehend.

Fig. 1

Fig.3

Fig.2

Fig.4

Fig.5